# EUROPÄISCHE PATENTSCHRIFT

(11) **EP 2 384 939 B1**
(45) Veröffentlichungstag und Bekanntmachung des Hinweises auf die Patenterteilung: **17.04.2013**
(21) Anmeldenummer: 11153275.0
(22) Anmeldetag: 04.02.2011
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 09.11.2011
(73) Patentinhaber: ISE Automotive GmbH, 51702 Bergneustadt (DE)
(72) Erfinder: Schulte, Michael, 57462, Olpe/Biggesee (DE)
(74) Vertreter: Kalkoff & Partner

(56) Entgegenhaltungen:
- EP-A2- 1 057 696
- EP-A2- 1 273 484
- EP-A2- 1 844 990
- EP-A2- 2 006 164
- DE-A1- 10 002 723

## Beschreibung

Die Erfindung betrifft ein Überrollschutzsystem für Kraftfahrzeuge, mit
- einem zwischen einer Ruhelage und einer Überschlagsposition in Längsrichtung verstellbaren Überrollkörper,
- einer den Überrollkörper in Richtung auf die Überschlagsposition federvorgespannten Antriebseinheit und
- einer mittels einer Steuereinheit zwischen einer den Überrollkörper arretierenden Sperrstellung und einer den Überrollkörper freigebenden Freigabestellung verstellbaren Verriegelungseinheit.

Überrollschutzsysteme der eingangs genannten Art sind in vielfältigen Ausgestaltungen bereits aus dem Stand der Technik bekannt. Sie dienen bei Cabriolets aller Art zum Schutz der Insassen bei einem Überschlag, wobei die in der Überschlagsposition aufgestellten Überrollkörper den Insassen einen Überlebensraum bereitstellen, wenn das Fahrzeug auf den Überrollkörpers abrollt.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, werden vermehrt sogenannte aktive Überrollschutzsysteme eingesetzt, bei denen die Überrollkörper im Normalzustand in einer Ruhelage befindlich sind und nur im Gefahrenfall, nämlich bei einem drohenden Überschlag in die Überschlagsposition verstellt werden, in der sie in Verbindung mit der Karosserie einen Überlebensraum bereitstellen.

Überrollkörper, bspw. Überrollbügel, die hinter den Fahrzeugsitzen angeordnet sind und sich im Falle eines Überschlags selbsttätig aufstellen, stellen eine bevorzugte Ausführungsform eines aktiven Überrollschutzsystems dar. Der Überrollkörper ist dabei in der Ruhelage beispielsweise durch eine Antriebseinheit in Richtung auf die Überschlagsposition vorgespannt und wird in dieser Position durch die Verriegelungseinheit gehalten. Im Überschlagsfall gibt die Verriegelungseinheit sensorgesteuert den Überrollkörper frei, so dass dieser, angetrieben durch die Antriebseinheit, in die Überschlagsposition gelangt. Die Freigabe des Überrollkörpers durch die Verriegelungseinheit erfolgt dabei in der Regel durch einen Aktuator, welcher eine Verstellung der Verriegelungseinheit bewirkt.

Die Funktionsweise der Aktuatoren kann dabei von System zu System abweichen. Neben Aktuatoren, bei denen zur Auslösung ein Sperrstift aus einem Aktuatorgehäuse herausschnellt, um eine Verstellung der Verriegelungseinheit zu bewirken, werden auch sogenannten ziehende Aktuatoren eingesetzt, bei denen der Aktuator, bspw. der Sperrstift in der Sperrstellung dauerhaft mit der Verriegelungseinheit in Eingriff befindlich ist und diese in dieser Stellung arretiert. Zur Auslösung des Überrollschutzsystems wird bei der Aktivierung des Aktuators dieser mit der Verriegelungseinheit außer Eingriff gebracht. Der Stift wird bspw. in ein Aktuatorgehäuse hinein verlagert.

Bekannte Überrollschutzsysteme mit derartigen Verriegelungseinheiten weisen den Nachteil auf, dass aufgrund der zu erfolgenden Anordnung der Verriegelungseinheiten seitlich oder unterhalb des Überrollkörpers das Überrollschutzsystem einen erhöhten Platzbedarf am Fahrzeug beansprucht.

Das Dokument EP 1057696 offenbart ein Überrollschutzsystem gemäß dem Oberbegriff des Anspruchs 1.

Der Erfindung liegt die Aufgabe zugrunde, ein Überrollschutzsystem bereitzustellen, welches einen nur geringen Bauraum beansprucht und gleichzeitig eine zuverlässige Auslösung im Gefahrenfall gewährleistet.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass die Verriegelungseinheit und die Steuereinheit in Wirkverbindung stehend an dem Überrollkörper angeordnet sind. Das erfindungsgemäße Überrollschutzsystem zeichnet sich dadurch aus, dass sowohl die Verriegelungseinheit, welche den Überrollkörper in der Ruhelage gegenüber der durch die Antriebseinheit erzeugten Vorspannung festlegt, als auch die Steuereinheit, welche derart mit der Verriegelungseinheit in Eingriff befindlich ist, dass sie eine Verstellung der Verriegelungseinheit zwischen einer den Überrollkörper arretierenden Sperrstellung und einer den Überrollkörper freigebenden Freigabestellung kontrolliert, am Überrollkörper, d. h. am verfahrbaren Bauteil angeordnet sind. Die Verriegelungseinheit wirkt mit einem oder mehreren fahrzeugfesten Bauteilen zusammen, die den Überrollkörper umgeben, um diesen in der Ruhelage zu arretieren. Durch die erfindungsgemäße Ausgestaltung des Überrollschutzsystems lässt sich dieses besonders platzsparend ausführen, so dass in der Einbaulage an der Rohbaustruktur ein ausreichend großer Freiraum verbleibt, der zu anderen Zwecken genutzt werden kann.

Die Anordnung der Verriegelungseinheit und der Steuereinheit an dem Überrollkörper kann dabei grundsätzlich in beliebiger Weise erfolgen. So kann bspw. bei einer Ausgestaltung des Überrollkörpers, mit Aufnahmen zur Aufnahme der vorgenannten Einheiten, der Platzbedarf des Überrollschutzsystems in ergänzender Weise gesenkt werden. Auch die Wirkverbindung der Verriegelungseinheit und der Steuereinheit ist grundsätzlich beliebig ausgestaltbar. Nach einer besonders vorteilhaften Weiterbildung der Erfindung weist die Steuereinheit jedoch einen in der Sperrstellung mit der Verriegelungseinheit in Eingriff befindlichen und zur Freigabe in eine Außer-Eingriff-Stellung bringbaren Aktuator auf.

Gemäß dieser Ausgestaltung der Erfindung wird die Sperrstellung der Verriegelungseinheit, durch die der Überrollkörper in der Ruhelage gesichert ist, dadurch erreicht, dass sich die Steuereinheit dauerhaft über einen Aktuator mit der Verriegelungseinheit in Eingriff befindet. Eine Verlagerung des Überrollkörpers setzt eine Auflösung der in der Sperrstellung bestehenden Wirkverbindung zwischen der Verriegelungseinheit und der Steuereinheit voraus, wobei der Aktuator der Steuereinheit in eine entsprechende Stellung gegenüber der Verriegelungseinheit bewegt wird, in der dieser nicht mehr mit der Verriegelungseinheit in Eingriff befindlich ist, wie das in der Sperrstellung der Fall ist.

Diese Ausgestaltung der Erfindung zeichnet sich durch ihre hohe Funktionssicherheit aus, so dass in besonders zuverlässiger Weise gewährleistet werden kann, dass es im Gefahrenfall zu einer zuverlässigen Aufstellung des Überrollkörpers in die Überschlagsposition kommt. Eine in der Sperrstellung durch die Steuereinheit vorliegende Blockade der Verriegelungseinheit wird im Falle einer Freigabe aufgelöst, so dass dann die Verriegelungseinheit ungehindert durch die Steuereinheit in die Freigabestellung bewegt werden kann.

Die Ausgestaltung der In-Eingriff- bzw. Außer-Eingriff-Stellung von Verriegelungseinheit und Steuereinheit, wobei in der Außer-Eingriff-Stellung die Verriegelungseinheit und die Steuereinheit derart zueinander angeordnet sind, dass eine Verlagerung des Überrollkörpers erfolgen kann, ist dabei grundsätzlich beliebig ausgestaltbar. Besonders vorteilhafterweise ist jedoch der Aktuator über einen längsverschiebbar ausgebildeten Sperrstift in der Sperrstellung mit der Verriegelungseinheit in Eingriff befindlich. Diese Ausgestaltung der Erfindung, bei der es sich um einen ziehend wirkenden Aktuator handelt, zeichnet sich durch ihre hohe Funktionssicherheit aus. In der Sperrstellung befindet sich der Sperrstift in Eingriff mit der Verriegelungseinheit. Die Außer-Eingriff-Stellung kann bspw. durch eine Rückverlagerung des Sperrstifts in ein vorteilhafterweise vorgesehenes Aktuatorgehäuse erreicht werden.

Der Aktuator kann dabei in beliebiger Weise ausgeführt werden, sofern gewährleistet ist, dass dieser im Gefahrenfall eine zuverlässige Verlagerung in eine Außer-Eingriff-Stellung bewirkt. Verwendbar sind bspw. elektromagnetisch wirkende Aktuatoren, welche überdies bei entsprechender Ansteuerung eine Rückverlagerung der Verriegelungseinheit in die Sperrstellung ermöglichen. Nach einer besonders vorteilhaften Weiterbildung der Erfindung ist der Aktuator jedoch als pyrotechnischer Aktuator ausgebildet, welcher eine besonders hohe Zuverlässigkeit aufweist. Darüber hinaus erlaubt es die Verwendung eines pyrotechnischen Aktuators, das Überrollschutzsystem besonders kostengünstig auszugestalten, wobei der Einsatz pyrotechnischer Aktuatoren insbesondere die kostengünstige Herstellung zunehmend von Kundenseite geforderter "Einweg-Systeme" ermöglicht, für die eine Reversierbarkeit nicht erforderlich ist, da nach einer Auslösung des Systems dieses als Ganzes ausgetauscht wird.

Die Ausgestaltung der Verriegelungseinheit, insbesondere deren Aufbau und Funktionsweise zur Festlegung des Überrollkörpers in der Ruhelage ist grundsätzlich frei wählbar. Nach einer besonders vorteilhaften Ausgestaltung der Erfindung weist die Verriegelungseinheit jedoch ein an dem Überrollkörper zwischen der Sperrstellung und der Freigabestellung verstellbar angeordnetes Sperrelement auf. Das Sperrelement dient zur Festlegung des Überrollkörpers und ist als solches derart angeordnet und ausgebildet, dass es zwischen einer den Überrollkörper festlegenden Sperrstellung, in der die Verriegelungseinheit mit der Steuereinheit bzw. dem Sperrelement in Eingriff ist und der Freigabestellung bewegbar ist. Die Verwendung einfacher Sperrelemente, welche auch unmittelbar in Eingriff mit der Steuereinheit befindlich sein können, ermöglichen eine besonders einfache und kostengünstige Ausgestaltung des Überrollschutzsystems, welches eine besonders hohe Zuverlässigkeit aufweist.

Besonders vorteilhafterweise greifen dabei die Sperrelemente in der Sperrstellung in ein fahrzeugfest angeordnetes Bauteil ein, so dass eine unmittelbare Lagesicherung des Überrollkörpers in der Ruhelage über die Sperrelemente erfolgen kann. Als fahrzeugfest angeordnete Bauteile, welche mit den Sperrelementen zusammenwirken, werden dabei bevorzugt solche Bauelemente verwendet, welche den Überrollkörper unmittelbar umgeben. So kann es sich hierbei bspw. um ein den Überrollkörper führendes und mit der Rohbaustruktur verbundenes Gehäuse oder auch unmittelbar um Abschnitte der Rohbaustruktur handeln.

Die Ausgestaltung der Verlagerung der Sperrelemente aus deren Sperrstellung in eine Freigabestellung, nachdem die Steuereinheit in einer Außer-Eingriff-Stellung bewegt wurde, ist frei wählbar. So können die Sperrelemente bspw. durch geeignete, separate Spannelemente in Richtung auf die Freigabestellung vorgespannt sein. Nach einer besonders vorteilhaften Ausgestaltung der Erfindung sind die Sperrelemente in der Sperrstellung jedoch derart angeordnet und/oder ausgestaltet, dass sie durch die Antriebseinheit in Richtung auf die Freigabestellung vorgespannt sind. Gemäß dieser Ausgestaltung der Erfindung bewirkt die durch die Antriebseinheit erzeugte Vorspannung im Falle einer Freigabe der Verriegelungseinheit aufgrund einer Außer-Eingriffs-Position der Steuereinheit automatisch eine Verlagerung der Sperrelemente in Richtung auf deren Freigabestellung. Auf separate, die Bewegungsrichtung der Sperrelemente vorgebende Elemente kann gemäß dieser Ausgestaltung der Erfindung verzichtet werden. Die Sperrelemente sind hierzu bspw. schwenkbar angeordnet oder weisen Schrägflächen auf, die aufgrund der Vorspannung durch die Antriebseinheit eine Verlagerung der Sperrelemente in die Freigabestellung bewirken.

Nach einer besonders vorteilhaften Ausgestaltung der Erfindung ist die Verriegelungseinheit ferner zur Arretierung des Überrollkörpers im Bereich der Überschlagsposition ausgebildet. Gemäß dieser Ausgestaltung der Erfindung kann auf separate Verriegelungseinheiten zur Sicherung der Position des Überrollkörpers im Bereich dessen Überschlagsposition verzichtet werden, so dass das Überrollschutzsystem in ergänzender Weise besonders platzsparend ausgestaltet werden kann. Eine Rückverlagerung des Überrollkörpers in Z-Achsenrichtung wird bei einer entsprechenden Ausgestaltung der Verriegelungseinheit besonders wirksam vorgebeugt.

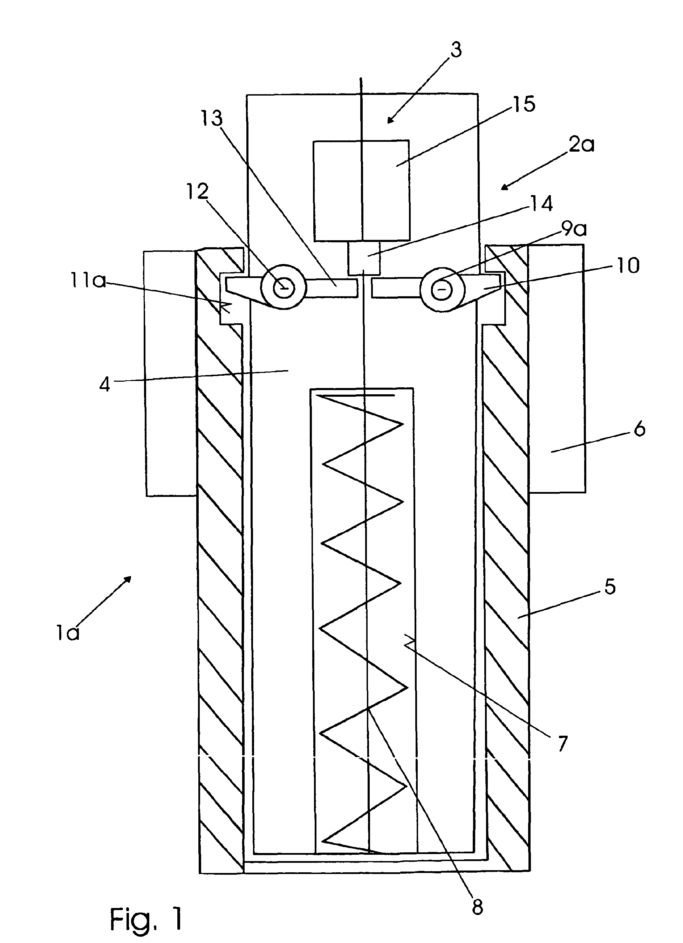

Nachstehend werden zwei Ausführungsbeispiele der Erfindung mit Bezug auf die Zeichnungen näher erläutert. In den Zeichnungen zeigen:
- Fig. 1: eine Funktionsskizze eines ersten Ausführungsbeispiels eines Überrollschutzsystems mit am Überrollkörper angeordneter Steuereinheit und Verriegelungseinheit;
- Fig. 2: eine vergrößerte Darstellung eines Teilbereichs des Überrollschutzsystems von Fig. 1 in einer Freigabestellung und
- Fig. 3: eine vergrößerte Darstellung eines Teilbereichs eines zweiten Ausführungsbeispiels eines Überrollschutzsystems.
Ein erstes Ausführungsbeispiel eines Überrollschutzsystems 1a ist in Fig. 1 in Form einer Skizze dargestellt. Das Überrollschutzsystem 1a weist dabei einen gegenüber einem Gehäuse 5 verlagerbar angeordneten Überrollkörper 4 auf, welcher in der in Fig. 1 dargestellten Ruhelage durch eine Schraubendruckfeder 8, welche innerhalb des Überrollkörpers 4 in einer Ausnehmung 7 angeordnet ist, in Richtung auf eine hier nicht dargestellte Überschlagsposition vorgespannt ist.

Zur Sicherung der dargestellten Ruhelage dienen Sperrelemente 9a, welche an dem Überrollkörper 4 über Gelenkbolzen 12 drehbar gelagert sind, wobei die Sperrelemente 9a mit einem ersten, von dem Überrollkörper 4 in der Ruhelage vorstehenden Ende 10 in in das Gehäuse 5 eingebrachte Öffnungen 11a hineinragen, wohingegen die den ersten Enden 10 abgewandten Enden 13 der Sperrelemente 9a an einem Sperrstift 14 eines Aktuators 15 einer Steuereinheit 3 anliegen.

Der Sperrstift 14 verhindert in seiner ausgefahrenen Position eine Verdrehung der Sperrelemente 9a aufgrund der durch die Schraubendruckfeder 8 erzeugten Federvorspannung und blockiert somit die Position des Überrollkörpers 4 gegenüber dem Gehäuse 5 bzw. einer Rohbaustruktur 6 eines hier nicht dargestellten Kraftfahrzeuges.

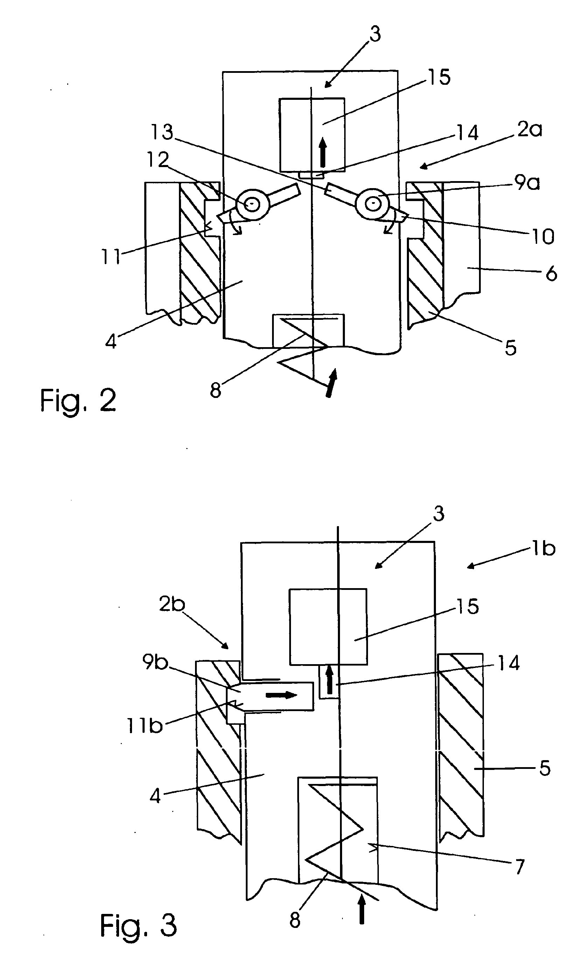

Zur Verlagerung der Verriegelungseinheit 2a in die in Fig. 2 dargestellte Freigabestellung erfolgt eine Aktivierung des Aktuators 15, wodurch der Sperrstift 14 in das Aktuatorgehäuse zurückverlagert wird. Hierdurch können die Sperrelemente 9a um die Gelenkbolzen 12 in eine Position verschwenkt werden, in der die ersten Enden 10 außer Eingriff mit den Öffnungen 11a gelangen, so dass der Überrollkörper 4 ungehindert, angetrieben durch die vorgespannte Schraubendruckfeder 8, in eine hier nicht dargestellte Überschlagsposition verlagert werden kann.

In Fig. 3 ist in Form einer Skizze eine zweite Ausführungsform eines Überrollschutzsystems 1b dargestellt, welches sich von dem in Fig. 1 und 2 dargestellten Überrollschutzsystem 1a durch die Ausgestaltung der Verriegelungseinheit 2b unterscheidet. Im Gegensatz zu dem in den Fig. 1 und 2 dargestellten Überrollschutzsystem 1a weist die Verriegelungseinheit 2b kein drehbares Verriegelungselement 9a, sondern ein verschiebbares Sperrelement 9b auf. In der in Fig. 3 dargestellten Sperrstellung ragt das Sperrelement 9b mit einem sich verjüngenden Bereich in eine entsprechend verjüngt ausgebildete Öffnung 11b an dem dem Überrollkörper 4 umgebenden Gehäuse 5.

Das Verriegelungselement 9b ist aufgrund der Federvorspannung durch die Schraubendruckfeder 8 und der verjüngt ausgebildeten Verbindung von Sperrelement 9b und Öffnung 11b bestrebt, sich in Richtung der Mittellinie des Überrollkörpers 4 zu bewegen. In der dargestellten Ruhelage wird eine solche Bewegung durch die Steuereinheit 3 dadurch blockiert, dass der Sperrstift 14 des Aktuators 15 an den dem verjüngten Abschnitt abgewandten Ende des Sperrelements 9b anliegt. Eine Freigabe der Verriegelungseinheit 2b erfolgt durch eine Aktivierung des Aktuators 15, wodurch der Sperrstift 14 in Richtung auf das Aktuatorgehäuse verlagert wird, wodurch dann eine Bewegung des Sperrstifts 9b in eine Position erfolgt, in der dieser außer Eingriff mit der Öffnung 11b gelangt, so dass der Überrollkörper 4, angetrieben durch die Schraubendruckfeder 8, in die Überschlagsposition bewegt wird.

## Patentansprüche

1. Überrollschutzsystem für Kraftfahrzeuge, mit
- einem zwischen einer Ruhelage und einer Überschlaposition in Längsrichtung verstellbaren Überrollkörpesr(4),
- einer auf den Überrollköper (4) in Richtung auf die Überschlagsposition wirkenden, federvorgespannten Antriebseinheirt (8) und
- einer mittels einer Steuereinheit (3) zwischen einer den Überrollkörper arretierenden Sperrstellung und einer den Überrollkörper freigebenden Freigabestellung verstellbaren Verriegelungseinheit (2a, 2b),
**dadurch gekennzeichnet, dass**
die Verriegelungseinheit (2a, 2b) und die Steuereinheit (3) in Wirkverbindung Stehend an dem Überrollkörper (4) angeordnet sind.

2. Überrollschutzsystem nach Anspruch 1, **dadurch gekennzeichnet, dass** die Steuereinheit (3) einen in der Sperrstellung mit der Verriegelungseinheit (2a, 2b) io Eingriff befindlichen und zur Freigabe in eine Außer-Eingriff-Steungbringbaren Aktuator (15) aufweist.

3. Überrollschutzsystem nach Anspruch 2, **dadurch gekennzeichnet, dass** der Aktuator (15) über einen längsyerschiebbar ausgebildeten Sperrstift (14) in der Sperrstellung mit der verriegelungseinheit (2a, 2b) in Eingriff befindlich ist.

4. Überrollschutzstem nach Anspruch 2 oder 3, **dadurch gekennzeichnet, dass** der Aktuator (15) als pyrotechnischer Aktuator ausgebildet ist

5. Überrollschutzsystem nach einem der vorhergehenden Ansprüche, **dadurch gekennzeichnet dass** die Verriegelungseinheit (2a, 2b) ein an dem Überrollkörper(4) zwischen der Sperrstellung und der Freigabestellung verstellbar angeordnetes Sperrelement (9a, 9b) aufweist.

6. Überrollschutzsystem nach Anspruch 5, **dadurch gekennzeichnet, dass** das Sperrelement (9a, 9b) in der Sperrstellung in ein fahrzeugfest angeordnetes Bauteil (5) eingreift.

7. Überrollschutzsystem nach Anspruch 5 oder 6, **dadurch gekennzeichnet, dass** die Sperrelemente (9a, 9b) in der Sperrstellung derart angeordnet sind, dass sie durch die Antriebseinheit (8) in Richtung auf die Freigabestellung vorgespannt sind.

8. Überrollschutzsystem nach einem der vorhergehenden Ansprüche, **dadurch gekennzeichnet, dass** die Verriegelungseinheit (2a, 2b) zur Arretierung des Überrollkörpers (4) im Bereich der Überschlagsposition ausgebildet ist.

## Claims

1. A rollover protection system for motor vehicles, comprising:
- a rollover body (4) adjustable in a longitudinal direction between a rest position and a rollover position,
- a spring-loaded drive unit (8) that acts on the rollover body (4) in the direction of the rollover position, and
- a locking unit (2a, 2b) adjustable by means of a control unit (3) between a locking position locking the rollover body and a release position releasing the rollover body, **characterized in that**
- the locking unit (2a, 2b) and the control unit (3) are arranged in a functionally connected manner vertically on the rollover body (4).

2. The rollover protection system according to claim 1, **characterized in that** the control unit (3) has an actuator (15) that engages with the locking unit (2a, 2b) in the locking position and can be brought into a disengaged position for release.

3. The rollover protection system according to claim 2, **characterized in that** the actuator (15) is engaged with the locking unit (2a, 2b) in the locking position by means of a locking pin (14) designed to be longitudinally displaceable.

4. The rollover protection system according to claim 2 or 3, **characterized in that** the actuator (15) is designed as a pyrotechnic actuator.

5. The rollover protection system according to one of the preceding claims, **characterized in that** the locking unit (2a, 2b) has a locking element (9a, 9b) arranged to be adjustable on the rollover body (4) between the locking position and the release position.

6. The rollover protection system according to claim 5, **characterized in that** the locking element (9a, 9b), when in the locking position, engages in a component (5) fixed to the vehicle.

7. The rollover protection system according to claim 5 or 6, **characterized in that** the locking elements (9a, 9b) are arranged in the locking position such that they are pretensioned toward the release position by the drive unit (8).

8. The rollover protection system according to one of the preceding claims, **characterized in that** the locking unit (2a, 2b) is designed to lock the rollover body (4) in the region of the rollover position.

## Revendications

1. Système de protection contre les tonneaux pour des véhicules automobiles, comprenant
- un corps de protection contre les tonneaux (4) réglable dans le sens longitudinal entre une position de rangement et une position de retournement,
- une unité d'entraînement (8) précontrainte par ressort qui a l'effet au corps de protection contre les tonneaux (4) en direction de la position de retournement, et
- une unité de verrouillage (2a, 2b) réglable au moyen d'une unité de commande (3) entre une position d'arrêt bloquant le corps de protection contre les tonneaux et une position de libération libérant le corps de protection contre les tonneaux,
**caractérisé en ce que**
l'unité de verrouillage (2a, 2b) et l'unité de commande (3) sont disposées en liaison active verticalement sur le corps de protection contre les tonneaux (4).

2. Système de protection contre les tonneaux selon la revendication 1, **caractérisé en ce que** l'unité de commande (3) présente un actionneur (15) qui se trouve en prise dans la position d'arrêt avec l'unité de verrouillage (2a, 2b) et peut être amené dans une position de désengrènement pour sa libération.

3. Système de protection contre les tonneaux selon la revendication 2, **caractérisé en ce que** l'actionneur (15) se trouve en prise avec l'unité de verrouillage (2a, 2b) dans la position d'arrêt via une goupille d'arrêt (14) formée longitudinalement coulissante.

4. Système de protection contre les tonneaux selon les revendications 2 ou 3, **caractérisé en ce que** l'actionneur (15) se présente sous la forme d'un actionneur pyrotechnique.

5. Système de protection contre les tonneaux selon une des revendications précédentes, **caractérisé en ce que** l'unité de verrouillage (2a, 2b) présente un élément d'arrêt (9a, 9b) monté réglable sur le corps de protection contre les tonneaux (4) entre la position d'arrêt et la position de libération.

6. Système de protection contre les tonneaux selon la revendication 5, **caractérisé en ce que** l'élément d'arrêt (9a, 9b) s'engage dans la position d'arrêt dans une partie structurale (5) solidairement disposée sur le véhicule.

7. Système de protection contre les tonneaux selon les revendications 5 ou 6, **caractérisé en ce que** les éléments d'arrêt (9a, 9b) sont disposés dans la position d'arrêt, de telle sorte qu'ils sont précontraints à travers l'unité d'entraînement (8) en direction de la position de libération.

8. Système de protection contre les tonneaux selon une des revendications précédentes, **caractérisé en ce que** l'unité de verrouillage (2a, 2b) est formée dans la zone de la position de retournement pour le blocage du corps de protection contre les tonneaux (4).
